# EUROPEAN PATENT SPECIFICATION

(11) **EP 2 266 790 B1**
(45) Date of publication and mention of the grant of the patent: **23.11.2016**
(21) Application number: 09732960.1
(22) Date of filing: 13.04.2009
(51) Int. Cl.: B32B 23/06, B32B 23/08, B32B 23/20, B32B 27/08, B32B 27/10, B32B 27/16, B32B 27/28, B32B 27/36, B32B 27/32, B32B 27/34, B32B 3/30, C09J 7/02, B32B 27/30, B32B 7/06, B32B 7/12, C08J 7/04

(54) **PROCESS FOR PRODUCING A FILM FOR SCATTERING PREVENTION**
VERFAHREN ZUR HERSTELLUNG EINER FOLIE ZUR STREUUNGSPRÄVENTION
PROCÉDÉ DE PRODUCTION D'UN FILM DE PRÉVENTION DE LA DIFFUSION

(30) Priority: 15.04.2008 JP 2008105959
(43) Date of publication of application: 29.12.2010
(73) Proprietor: LINTEC Corporation, Tokyo 173-0001 (JP)
(72) Inventor: MATSUSHITA, Takashi, Tokyo 173-0001 (JP)
(74) Representative: Gille Hrabal
(86) International application number: PCT/JP2009/057810
(87) International publication number: WO 2009/128551

(56) References cited:
- JP-A- 2004 045 988
- JP-A- 2006 110 754
- JP-A- 2006 127 841
- JP-A- 2007 331 128
- "Lichtstreuung" In: Jürgen Falbe, Manfred Regitz: "Römpp Chemie Lexikon", 1990, Georg Thieme Verlag, Stuttgart New York, XP002682345, pages 2503-2504, * the whole document *
- 'Material Safety Data Sheet for Dipentaerythritol Pentaacrylate', [Online] 15 November 2013, pages 1 - 3, XP055212639 Retrieved from the Internet: <URL:http://www.polysciences.com/skin/front end/default/polysciences/pdf/16311.pdf> [retrieved on 2015-09-10]

## Description

### TECHNICAL FIELD

The present invention relates to a process for producing a film for scattering prevention. More particularly, the present invention relates to a process for effectively producing a film for scattering prevention which is attached to window panes of buildings for safety in case of earth quake, has a hard coat layer and suppresses formation of interference fringes.

### BACKGROUND ART

Films for scattering prevention are frequently attached to window panes of buildings so that danger caused by scattered pieces of glass can be prevented when window panes are broken in case of a disaster such as earth quake.

In general, a hard coat layer having a thickness of 0.5 to 5 µm is formed on the surface of the film for scattering prevention to prevent formation of scratches during the operation of lamination. In many cases, the hard coat layer is formed by using a rod coater having a wire wound around a rod in a spiral shape since the coating process using the rod coater is suitable for forming a thin film.

Recently, fluorescent lights of the three wavelength type having peaks at blue, green and red ranges which are sensitive to human eyes are frequently used as the fluorescent light for lighting of office rooms. Due to this condition, interference fringes caused by uneven thickness of the hard coat layer are being recognized more often.

The uneven thickness due to the rod coater is formed, in general, in the transverse direction of the substrate and formed consecutively along the direction of movement of the substrate film in the production.

When the surface of a hard coat layer having uneven thickness is irradiated with blue, green and red lights, light reflected at the surface of the hard coat layer and light reflected at the interface of the hard coat layer and the substrate after penetrating the hard coat layer interfere with each other. Lights of blue, green and red are enhanced at portions having thicknesses corresponding to the lights, and interference fringes of blue, green and red, respectively, are recognized.

Since conventional lights which are not of the three wavelength type contain lights having continuous wavelengths, boundaries of the colors are ambiguous, and the interference fringes are not markedly recognized.

To suppress the formation of interference fringes, a method in which light reflected at the interface of the hard coat layer and the substrate film is made diffuse (for example, refer to Patent Reference 1) and a method in which light reflected at the surface of the hard coat layer is made diffuse (for example, refer to Patent Reference 2) have been disclosed. However, these methods have a drawback in that the film appears white.

A method in which the refractive index of the hard coat layer and the substrate film are made the same so that the light reflected at the interface of these layers is decreased (for example, refer to Patent Reference 3) is disclosed. In accordance with this method, it is necessary that an expensive resin be used.

As the method for making the thickness of the hard coat layer uniform, a method in which formation of uneven thickness due to rapid evaporation of a diluting solvent in the drying step is suppressed (for example, refer to Patent Reference 4) is disclosed. In accordance with this method, formation of uneven thickness due to insufficient accuracy in the coating cannot be completely eliminated.
Patent Reference 5 discloses a film for scattering prevention, comprising a hard coat layer, an adhesive layer and a release sheet, wherein the hard coat layer was laminated on one face of a base film, the adhesive layer was laminated on the other face of the base film, and the release sheet was laminated on the adhesive layer.
Patent Reference 6 discloses a gas barrier film for an electronic display media which has an intermediate layer laminated on one face of a base material, and the document specifies the ranges of the average difference between a high part of the protrusion and a low part of the protrusion, the range of the average distance of the protrusions, and the range of the average pitch between adjacent protrusions.
Patent Reference 7 discloses a hard coat film having concavity and convexity, and the patterns of the concavity and convexity, were formed by embossing.

The formation of uneven thickness by the use of a rod coater includes the following three cases.
(1) When the leveling of the coating fluid for forming the hard coat layer is poor, marks are formed by the wire wound around the rod and, as the result, interference fringes having a width of about several hundred micrometers are formed on the entire face in the direction along the movement of the film in the production.
(2) When unevenness is formed in the gap between the rod and the substrate film due to loosening of the substrate film, interference fringes having a width of about several centimeters are periodically formed in the direction along the movement of the film in the production.
(3) When unevenness is formed in the gap between the substrate film and the rod due to bending of the rod, interference fringes having a width of about several tens centimeters are periodically formed in the direction along the movement of the film in the production.

The problem of case (1) can be almost completely overcome by improving the leveling of the coating fluid. However, the formation of interference fringes cannot be completely suppressed in cases (2) and (3).
[Patent Reference 1] Japanese Patent Application Laid-Open No. Heisei 8(1996)-197670
[Patent Reference 2] Japanese Patent Application Laid-Open No. Heisei 10(1998)-282312
[Patent Reference 3] Japanese Patent Application Laid-Open No. 2003-213023
[Patent Reference 4] Japanese Patent Application Laid-Open No. 2005-290090
Patent Reference 5 JP 2007 - 331128 A
Patent Reference 6 JP 2006 - 127841 A
Patent Reference 7 JP 2006 - 110754 A

### DISCLOSURE OF THE INVENTION

### [Problems to be Overcome by the Invention]

Under the above circumstances, the present invention has an object of providing a process for producing a film for scattering prevention which is attached to window panes of buildings for safety in case of earth quake, has a hard coat layer and suppresses formation of interference fringes.

### [Means for Overcoming the Problems]

As the result of intensive studies by the present inventors to achieve the above object, the following knowledge was obtained.

It was found that a film for scattering prevention effectively suppressing formation of interference fringes could be obtained according to the process of claim 1 when, after one face of a substrate film was coated with a material for forming a hard coat layer using an applicator roll to form a coating layer, an engraving rod having a specific diameter on which a plurality of independent depressions were disposed at a constant pitch was rotated in a positive direction with respect to the direction of movement of the substrate film (in the same direction as the direction of movement of the substrate film) while the engraving rod was brought into contact with the coating layer formed above so that a plurality of independent protrusions substantially corresponding to the depressions were formed on the surface of the coating layer at a constant pitch and, thereafter, the coating layer obtained above was cured.

The present invention was completed based on the above knowledge.

The present invention provides:
(1) A process for producing a film for scattering prevention which comprises coating one face of a substrate film with an excessive amount material solution having a concentration of solid components of the range of 20 to 60 % by mass for forming a hard coat layer using an applicator roll to form a uncured coating layer, rotating an engraving rod having a diameter of 5 to 15 mm on which a plurality of independent depressions are present at a constant pitch in a positive direction with respect to the direction of movement of the substrate film, scraping the material for forming a hard coat layer from the one face of the substrate film by the engraving rod while the engraving rod is brought into contact with the coating layer formed above so that a plurality of independent protrusions substantially corresponding to the depressions are formed on a surface of the coating layer at a constant pitch and, drying by heating the coating layer obtained above, thereafter, curing the coating layer obtained above, wherein the film for scattering prevention produced by the above process comprises a hard coat layer formed on one face of the substrate film, a pressure sensitive adhesive layer and a release sheet successively laminated on another face of the substrate film, a plurality of independent protrusions comprising a material of an energy curable type are present on an entire surface of the hard coat layer at a constant pitch, the height of each protrusion is 0.1 to 10 µm, and the pitch between adjacent protrusion (a distance between central points of top portions of the protrusions) is 100 to 500 µm, the shape of the protrusion is a frustum of a polygonal pyramid or a frustum of a cone, the area of a bottom face of each protrusion is 0.001 to 0.25 mm²., and the angle of a face of the frustum of a polygonal pyramid or the frustum of a cone with respect to the bottom face is 30 to 60 degrees;
(2) A process for producing a film for scattering prevention described iun (1), wherein the depressions formed on the engraving rod are arranged at a constant distance in a direction inclined by 30 to 60 degrees with respect to an outer circumferential direction of the rod;
(3) A process for producing a film for scattering prevention described in any of (1) and (2), wherein the material for forming a hard coat layer is a material of an energy curable type, and the coating layer is cured by application of an energy to the coating layer.

### THE EFFECT OF THE INVENTION

In accordance with the present invention, the process for effectively producing the film for scattering prevention which is attached to window panes of buildings for safety in case of earth quake, has a hard coat layer and suppresses formation of interference fringes can be provided.

### BRIEF DESCRIPTION OF THE DRAWINGS

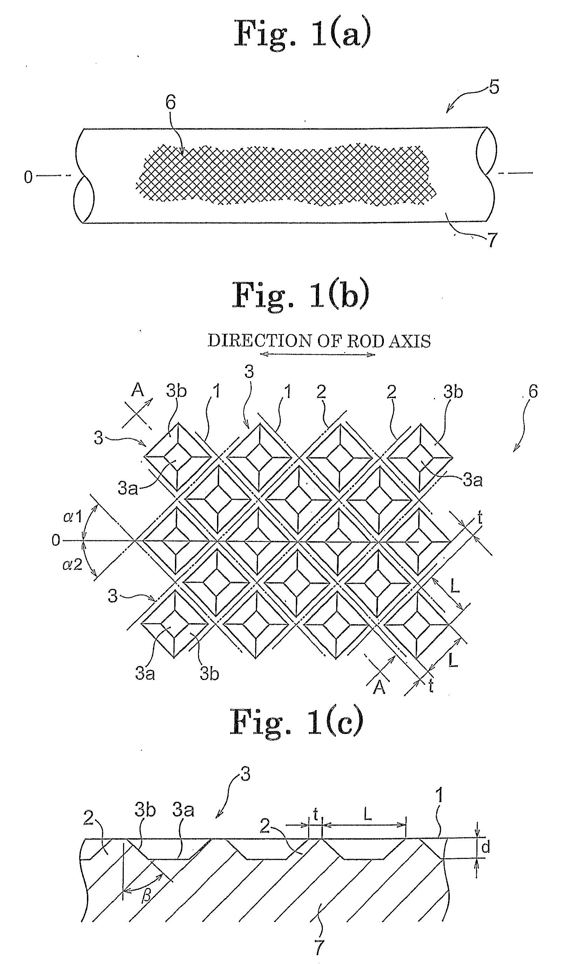

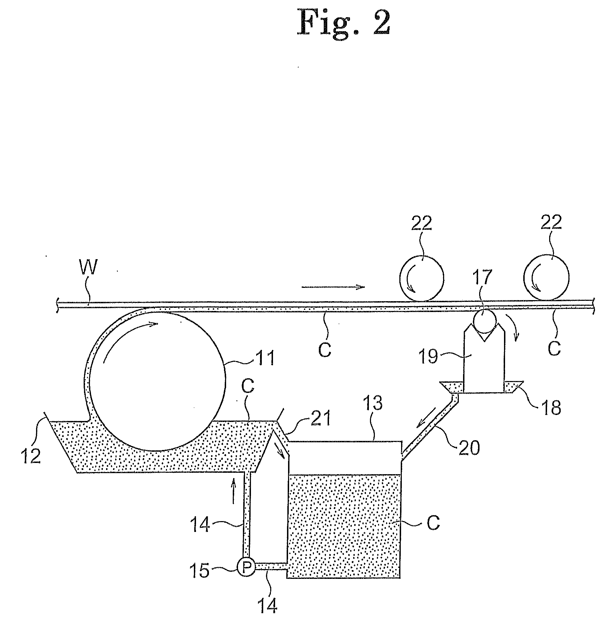

Figure 1(a) shows a front view exhibiting an example of the engraving rod used in the present invention. Figure 1(b) shows an expanded view obtained by developing the outer circumferential face into a flat plane. Figure 1(c) shows an expanded sectional view cut along the line A-A shown in Figure 1(b). Figure 2 shows a diagram exhibiting an example of the apparatus for forming an uncured coating layer for forming the hard coat layer in the process for producing a film for scattering prevention of the present invention. In the Figures, reference numerals mean as follows: 0: an axis of a rod; 1: a line of a first protrusion; 2: a line of a second protrusion; 3: a depression; 3a: a bottom face; 3b: a face of a side wall; 5: an engraving rod; 6: depressions and protrusions; 7: a material of a rod; 11: an applicator roll; 12: a feeding pan; 13: a storage tank; 14: a piping for feeding 15: a feeding pump; 17: an engraving rod; 18: a recovery pan; 19: a holder having a rod shape; 20: a piping for recovery; 21: an overflow pipe; 22: a guide roll; W: a substrate film; and C: a material for forming a hard coat layer.

### THE MOST PREFERRED EMBODIMENT TO CARRY OUT THE INVENTION

The film for scattering prevention is described in the following.

### [Film for scattering prevention]

The film for scattering prevention produced according to the process of the present invention is characterized in that the film comprises a hard coat layer formed on one face of a substrate film and a pressure sensitive adhesive layer and a release sheet successively laminated on the other face of the substrate film, wherein a plurality of independent minute protrusions comprising a material of the energy curable type are present on the entire surface of the hard coat layer at a constant pitch.

### (Substrate film)

The substrate film in the film for scattering prevention of the present invention is not particularly limited, and a film can be suitably selected as desired from films conventionally used as the substrate film in films for scattering prevention. Examples of the substrate film include films of polyolefin-based resins such as polyethylene, polypropylene, poly-4-methylpentene-1 and polybutene-1; polyester-based resins such as polyethylene terephthalate and polyethylene naphthalate; polycarbonate-based resins; polyvinyl chloride-based resins; polyphenylene sulfide-based resins; polyether sulfone-based resins; polyethylene sulfide-based resins; polyphenylene ether-based resins; styrene-based resins; acrylic resins; polyamide-based resins; polyimide-based resins; and cellulose-based resins such as cellulose acetate; and laminate films of these films.

The substrate film may be an unstretched film or a film treated by uniaxial stretching or biaxial stretching. The thickness of the substrate film is not particularly limited and can be suitably selected in accordance with the object of the use. The thickness is, in general, in the range of 5 to 200 µm and preferably in the range of 10 to 100 µm.

It is preferable that the substrate film is a transparent film. Where desired, the substrate film may be colored or treated by vapor deposition or may comprise ultraviolet light absorbers, light stabilizers and antioxidants. Where desired, the substrate film may be subjected to a surface treatment such as an oxidation treatment or a roughening treatment on one or both faces so that adhesion with a layer formed on the surface is improved. Examples of the oxidation treatment include the treatment by corona discharge, the treatment with plasma, the treatment with chromic acid (a wet process), the treatment with flame, the treatment with the heated air and the treatment with ozone and irradiation with ultraviolet light. Examples of the roughening treatment include the sand blasting treatment and the treatment with a solvent. The surface treatment can be suitably selected in accordance with the type of the substrate film. In general, the treatment by corona discharge is preferable from the standpoint of the effect and the operability. A primer layer may be formed.

### (Hard coat layer)

In the film for scattering prevention produced according to the present invention, a hard coat layer is formed on one face of the substrate film described above. The material for forming the hard coat layer is not particularly limited and a suitable material can be selected as desired from materials conventionally used for forming a hard coat layer on films for scattering prevention.

### <Material for forming a hard coat layer>

In the present invention, a material of the energy curable type is used as the material for forming a hard coat layer. The material of the energy curable type means a material crosslinked by application of thermal energy or by irradiation with an energy ray. The energy ray means a ray having an energy quantum among electromagnetic waves and charged particles which is, for example, ultraviolet light or electron beams.

The material of the energy curable type can be divided into (1) materials of the energy ray curable type and (2) materials of the thermosetting type.

### (1) Material of the energy ray curable type

Examples of the material of the energy ray curable type include materials comprising a compound of the energy curable type and, where desired, a photopolymerization initiator.

Examples of the compound of the energy ray curable type include oligomers of the energy curable type and monomers of the energy curable type. Example of the oligomer of the energy curable type include polyester acrylate-based oligomers, epoxy acrylate-based oligomers, urethane acrylate-based oligomers, polyether acrylate-based oligomers, polybutadiene acrylate-based oligomers, silicone acrylate-based oligomers and liquid silicone rubbers of the energy curable type. The polyester acrylate-based oligomer can be obtained, for example, by obtaining a polyester having hydroxyl group at both ends by condensation of a polybasic carboxylic acid and a polyhydric alcohol, followed by esterification of hydroxyl groups in the obtained polyester with (meth)acrylic acid, or by obtaining an oligomer by addition of an alkylene oxide to a polybasic carboxylic acid, followed by esterification of hydroxyl groups at the ends of the obtained oligomer with (meth)acrylic acid. The epoxy acrylate-based oligomer can be obtained, for example, by esterification of oxirane ring in an epoxy resin of the bisphenol type or an epoxy resin of the novolak type having a relatively low molecular weight by the reaction with (meth)acrylic acid. Epoxy acrylate-based oligomers of the carboxyl modification type which are obtained by partial modification of the epoxy acrylate-based oligomer with an anhydride of a dibasic carboxylic acid can also be used. The urethane acrylate-based oligomer can be obtained, for example, by obtaining a polyurethane oligomer by the reaction of a polyether polyol or a polyester polyol with a polyisocyanate, followed by esterification of the obtained polyurethane oligomer with (meth)acrylic acid. The polyol acrylate-based oligomer can be obtained, for example, by esterification of hydroxyl group in a polyether polyol with (meth)acrylic acid.

It is preferable that the weight-average molecular weight of the polymerizable oligomer is selected in the range of 500 to 100,000, more preferably in the range of 1,000 to 70,000 and most preferably in the range of 3,000 to 40,000 as obtained by the measurement of GPC and expressed as the value of the corresponding polystyrene used as the reference material.

The oligomer described above may be used singly or in combination of two or more.

Examples of the monomer of the energy curable type include di(meth)acrylic acid 1,4-butanediol ester, di(meth)acrylic acid 1,6-hexanediol ester, di(meth)acrylic acid neopentyl glycol ester, di(meth)acrylic acid polyethylene glycol ester, di(meth)acrylic acid neopentyl glycol adipate ester, di(meth)acrylic acid hydroxypivalic acid neopentyl glycol ester, dicyclopentanyl di(meth)acrylate, caprolactone-modified dicyclopentenyl di(meth)acrylate, di(meth)acrylic acid ethylene oxide-modified phosphoric acid ester, allyl-modified cyclohexyl di(meth)acrylate, di(meth)acrylic acid isocyanurate, dimethylol-tricyclodecane di(meth)acrylate, tri(meth)acrylic acid trimethylolpropane ester, tri(meth)acrylic acid dipentaerythritol ester, tri(meth)acrylic acid propionic acid-modified dipentaerythritol ester, tri(meth)acrylic acid pentaerythritol ester, tri(meth)acrylic acid propylene oxide-modified trimethylolpropane ester, tris(acryloxyethyl) isocyanurate, penta-(meth)acrylic acid propionic acid-modified dipentaerythritol ester, hexa(meth)acrylic acid dipentaerythritol ester and hexa(meth)acrylic acid caprolactone-modified dipentaerythritol ester. The monomer described above may be used singly or in combination of two or more.

In general, ultraviolet light or electron beams are used as the energy ray for irradiation. When ultraviolet light is used, a photopolymerization initiator can be used. Examples of the photopolymerization initiator include benzoin, benzoin methyl ether, benzoin ethyl ether, benzoin isopropyl ether, benzoin n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexyl phenyl ketone, 2-methyl-1-[4-(methylthio)phenyl]-2-morpholinopropan-1-one, 4-(2- hydroxyethoxy)phenyl 2-(hydroxy-2-propyl) ketone, benzophenone, p-phenylbenzophenone, 4,4'-diethylaminobenzophenone, dichloro-benzophenone, 2-methylanthraquinone, 2-ethylanthraquinone, 2-tertiary-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylamine benzoic acid ester and oligo[2-hydroxy-2-methyl-1-[4-(1-propenyl)phenyl]propanone]. The photopolymerization initiator may be used singly or in combination of two or more.

The amount of the photopolymerization initiator is, in general, 0.1 to 10 parts by mass based on 100 parts by mass of the solid components in the compound of the energy curable type described above.

### (2) Material of the thermosetting type

As the material of the thermosetting type, materials obtained by replacing the photopolymerization initiator in the materials of the energy ray curable type described above with a thermal polymerization initiator, where desired, can be used.

As the thermal polymerization initiator, organic peroxides and azo-based compounds can be used. Examples of the organic peroxide include dialkyl peroxides such as di-t-butyl peroxide, t-butyl cumyl peroxide and dicumyl peroxide; diacyl peroxides such as acetyl peroxide, lauroyl peroxide and benzoyl peroxide; ketone peroxides such as methyl ethyl ketone peroxide, cyclohexanone peroxide, 3,3,5-trimethylcyclohexanone peroxide and methylcyclohexanone peroxide; peroxyketals such as 1,1-bis(t-butylperoxy)cyclohexane; hydroperoxides such as t-butyl hydroperoxide, cumene hydroperoxide, 1,1,3,3-tetramethylbutyl hydroperoxide, p-menthane hydroperoxide, diisopropylbenzene hydroperoxide and 2,5-dimethylhexane 2,5-dihydroperoxide; and peroxyesters such as t-butyl peroxyacetate, t-butyl peroxy-2-ethylhexanoate, t-butyl peroxybenzoate, t-butyl peroxyisopropylcarbonate and t-butyl peroxy-3,5,5-trimethylhexanoate.

Examples of the azo-based compound include 2,2'-azobis-(4-methoxy-2,4-dimethylvaleronitrile), 2,2'-azobis(2-cyclopropyl-propionitrile), 2,2'-azobis(2,4-dimethylvaleronitrile), azobisisobutyronitrile, 2,2'-azobis(2-methylbutyronitrile), 1,1'-azobis(cyclohexane-1-carbonitrile), 2-(carbamoylazo)isobutylronitrile and 2-phenylazo-4-methoxy-2,4-dimethylvaleronitrile.

The thermal polymerization initiator may be used singly or in combination of two or more. The amount is, in general, 0.1 to 10 parts by mass based on the amount of the compound of the energy curable type used.

### (3) Preparation of material for forming hard coat layer

The material for forming a hard coat layer comprising the material of the energy ray curable type can be obtained by suitably adding the compound of the energy curable type described above, the photopolymerization initiator which is used where desired and various additives such as photosensitizers, polymerization inhibitors, antioxidants, ultraviolet light absorbers, light stabilizers, leveling agents and defoaming agents into a suitable solvent to prepare a uniform solution.

The material for forming a hard coat layer comprising the material of the thermosetting type can be obtained by suitably adding the compound of the thermosetting type described above, the thermal polymerization initiator which is used where desired and various additives such as polymerization inhibitors, antioxidants, ultraviolet light absorbers, light stabilizers, leveling agents and defoaming agents into a suitable solvent to prepare a uniform solution.

Examples of the solvent used for the preparation of the material for forming a hard coat layer include aliphatic hydrocarbons such as hexane and heptane; aromatic hydrocarbons such as toluene and xylene, halogenated hydrocarbons such as methylene chloride and ethylene chloride; alcohols such as methanol, ethanol, propanol and butanol; ketones such as acetone, methyl ethyl ketone, 2-pentanone, isophorone and cyclohexanone; esters such as ethyl acetate and butyl acetate; cellosolve-based solvents such as ethylcellosolve; and glycol ether-based solvents such as propylene glycol monomethyl ether. The solvent may be used singly or in combination of two or more.

The solid contents concentration in the material for forming a hard coat layer prepared as described above (the material of the energy ray curable type and the material of the thermosetting type) is in the range of 20 to 60% by mass and preferably in the range of 30 to 50% by mass from the standpoint of the property for coating and the property of providing the prescribed minute protruded shapes described below.

### <Formation of hard coat layer>

In the present invention, using the material for forming a hard coat layer obtained as described above (the material of the energy ray curable type or the material of the thermosetting type), the hard coat layer in which a plurality of independent protrusions comprising the material of the energy curable type are present on the entire surface of the hard coat layer at a constant pitch is formed by forming a coating layer in which the plurality of independent minute protrusions having the prescribed shape are present on one face of the substrate film described above at a constant pitch by using an engraving rod having a diameter of 5 to 15 mm, followed by drying the formed coating layer by heating and applying an energy to the dried layer to cure the layer, as described below specifically in the process for producing a film for scattering prevention.

When an energy ray is used as the energy for curing the coating layer by application of an energy, the material of the energy ray curable type described above is used as the material for forming a hard coat layer and, in general, ultraviolet light or electron beams are used as the energy ray. Ultraviolet light can be obtained from a high pressure mercury lamp, an electrodeless lamp [for example, a lamp manufactured by FUSION UV SYSTEMS JAPAN, K. K.] or a xenon lamp. Electron beams are obtained from an electron accelerator. Among these energy rays, ultraviolet light is preferable. The amount of the energy ray used for the irradiation can be suitably selected. For example, an amount of light of 100 to 500 mJ/cm² is preferable when ultraviolet light is used, and an amount of energy of 10 to 1,000 krad is preferable when electron beams are used.

When thermal energy is applied as the energy, the material of the thermosetting type described above is used as the material for forming a hard coat layer, and the treatment by heating at a temperature of about 100 to 140°C for about 1 to 5 minutes is conducted.

The hard coat layer provided with the prescribed shape can be obtained as described above.

### <Shape of hard coat layer>

The hard coat layer in the present invention has a plurality of independent minute protrusions comprising the material of the energy curable type formed on the entire surface thereof at a constant pitch. Each of the protrusions has the shape described in the following so that the interference fringes are dispersed as minute interference fringes having sizes which cannot be recognized by naked eyes.

In the present invention, the height of each of the protrusions (the distance from the top of the protrusion to the bottom face) is 0.1 to 10 µm, preferably 0.5 to 8 µm and more preferably 0.8 to 5 µm. The pitch between adjacent protrusions (the distance between the central points of the top portions) is 100 to 500 µm, preferably 130 to 300 µm and more preferably 150 to 250 µm.

The shape of each protrusion is a shape of a frustum of a polygonal pyramid or a frustum of a cone. As the frustum of a polygonal pyramid, frustums of trigonal pyramids, tetragonal pyramids and hexagonal pyramids are preferable. As for the sectional shape of the frustum of a polygonal pyramid cut in the transverse direction, sides of the polygon may have the same length (a regular polygon) or different lengths. The sectional shape of a frustum of a cone cut in the transverse direction may be a circular shape or an elliptical shape. Among these shapes, frustums of regular trigonal pyramids and frustums of regular tetragonal pyramids are preferable from the standpoint of the easiness of preparation of the engraving rod described below which is used for providing the shape described above.

The angle of the face of the frustum of a polygonal pyramid or the frustum of a cone with respect to the bottom face is about 30 to 60 degrees.

The area of the bottom face of each protrusion is 0.001 to 0.25 mm², more preferably 0.002 to 0.20 mm² and most preferably 0.003 to 0.15 mm².

In the present invention, when the protrusion has an edge portion, occasionally, the edge portion is inevitably rounded during the formation of the hard coat layer and, therefore, protrusions having rounded edges are included in the shape described above. When the viscosity of the coating fluid of the material for forming a hard coat layer is small, occasionally, the area of the bottom face cannot be precisely determined due to leveling of the protrusion. In this case, when the height of the protrusion is within the above range, the interference fringes can be dispersed to peripheral portions of the protrusion so that the interference fringes have sizes which cannot be recognized by naked eyes.

The process for providing the shape described above to the hard coat layer will be described in the process for producing the film for scattering prevention which will be described below.

### (Pressure sensitive adhesive layer)

In the film for scattering prevention produced according to the present invention, the pressure sensitive adhesive for forming the pressure sensitive adhesive layer on the face of the substrate film at the side opposite to the side having the hard coat layer is not particularly limited and can be suitably selected as desired from pressure sensitive adhesives conventionally used for pressure sensitive adhesive layers in films for scattering prevention. For example, acrylic pressure sensitive adhesives, rubber-based pressure sensitive adhesives, silicone-based pressure sensitive adhesives, polyurethane-based pressure sensitive adhesives and polyester-based pressure sensitive adhesives can be used. The pressure sensitive adhesive may be any of pressure sensitive adhesives of the emulsion type, the solvent type and the non-solvent type. The thickness of the pressure sensitive adhesive layer is, in general, 1 to 300 µm and preferably 5 to 100 µm.

Among the above pressure sensitive adhesives, acrylic pressure sensitive adhesives are preferable from the standpoint of the weatherability.

It is preferable that the pressure sensitive adhesive layer formed by using the acrylic pressure sensitive adhesive is a layer comprising an acrylic pressure sensitive adhesive which comprises an acrylic resin having a weight-average molecular weight of 500,000 to 2,000,000 and preferably 700,000 to 1,700,000 and has been treated for crosslinking. When the weight-average molecular weight is within the above range, the film for scattering prevention exhibiting excellent balance between the pressure sensitive adhesive force and the holding force can be obtained.

The weight-average molecular weight described above is the value obtained in accordance with the gel permeation chromatography (GPC) and expressed as the value of the corresponding polystyrene.

As the acrylic resin comprised in the acrylic pressure sensitive adhesive, (meth)acrylic acid ester-based copolymers are used. As the (meth)acrylic acid ester-based copolymer, (meth)acrylic acid ester-based copolymers, copolymers of a (meth)acrylic ester having 1 to 20 carbon atoms in the alkyl group in the ester portion, monomers having a functional group having active hydrogen and other monomers which are used where desired are preferable.

Examples of the (meth)acrylic acid esters having 1 to 20 carbon atoms in the alkyl group in the ester portion include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate and stearyl (meth)acrylate. The above (meth)acrylic acid ester may be used singly or in combination of two or more.

Examples of the monomer having a functional group having active hydrogen which is used where desired include (meth)acrylic acid hydroxyalkyl esters such as 2-hydroxyethyl (meth)acrylate, 2-hydroxy-propyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; acrylamides such as acrylamide, methacrylamide, N-methylacrylamide, N-methylmethacrylamide, N-methylolacrylamide and N-methylolmethacrylamide; monoalkylaminoalkyl (meth)acrylates such as monomethylaminoethyl (meth)acrylate, monoethylaminoethyl (meth)acrylate, monomethylaminopropyl (meth)acrylate and monoethyl-aminopropyl (meth)acrylate; and ethylenically unsaturated carboxylic acids such as acrylic acid, methacrylic acid, crotonic acid, maleic acid, itaconic acid and citraconic acid. The above monomer may be used singly or in combination of two or more.

Examples of the other monomer which is used where desired include vinyl esters such as vinyl acetate and vinyl propionate; olefins such as ethylene, propylene and isobutylene; halogenated olefins such as vinyl chloride and vinylidene chloride; styrene-based monomers such as styrene and α-methylstyrene; diene-based monomers such as butadiene, isoprene and chloroprene; nitrile-based monomers such as acrylonitrile and methacrylonitrile; and N,N-dialkyl-substituted acrylamides such as N,N-dimethylacrylamide and N,N-dimethylmethacrylamide. The above monomer may be used singly or in combination of two or more.

In the acrylic pressure sensitive adhesive, the form of copolymerization of the (meth)acrylic acid ester-based copolymer used as the resin component is not particularly limited and may be any of a random copolymer, a block copolymer and a graft copolymer.

In the present invention, the (meth)acrylic acid ester-based copolymer may be used singly or in combination of two or more.

As the acrylic pressure sensitive adhesive layer, a layer treated for crosslinking is preferable. The crosslinking agent used for the treatment of crosslinking is not particularly limited and a crosslinking agent can be suitably selected as desired from conventional crosslinking agents used for acrylic pressure sensitive adhesives. Examples of the crosslinking agent include polyisocyanate compounds, epoxy resins, melamine resins, urea resins, dialdehydes, methylol polymers, metal chelate compounds, metal alkoxides and metal salts. Among these crosslinking agents, polyisocyanate compounds and epoxy compounds are preferable.

In the present invention, the crosslinking agent may be used singly or in combination of two or more. The amount of the crosslinking agent is selected, in general, in the range of 0.01 to 20 parts by mass and preferably 0.1 to 10 parts by mass based on 100 parts by mass of the (meth)acrylic acid ester-based copolymer although the amount is different depending on the type of the crosslinking agent.

To the acrylic pressure sensitive adhesive described above, where desired, tackifiers, antioxidants, ultraviolet light absorbers, light stabilizers, softeners, silane coupling agents and fillers may be added.

In the present invention, the pressure sensitive adhesive described above may be directly applied to the face of the substrate film opposite to the face having the hard coat layer in accordance with a conventional process such as the bar coating process, the knife coating process, the roll coating process, the blade coating process, the die coating process or the gravure coating process. Thereafter, the formed coating layer is dried by heating at a temperature of 30 to 100°C for 30 seconds to 5 minutes to form a pressure sensitive adhesive layer, and a release sheet is attached to the obtained coating layer.

As another process, a pressure sensitive adhesive may be applied to the face of a layer of a release agent of the release sheet described above and dried to form a pressure sensitive adhesive layer. The obtained sheet is laminated to the face of the substrate film opposite to the face having the hard coat layer to transfer the pressure sensitive adhesive layer. The release sheet may be left being attached.

Examples of the release sheet include release sheets prepared by coating a paper substrate such as glassine paper, coated paper and woodfree paper, a laminate paper obtained by laminating the paper substrate with a thermoplastic resin such as polyethylene or a plastic film with a release agent. Examples of the plastic film include films of polyesters such as polyethylene terephthalate, polybutylene terephthalate and polyethylene naphthalate and polyolefins such as polypropylene and polyethylene. As the release agent, silicone-based release agents, fluorine-based release agents and long chain alkyl-based release agent can be used. Among these release agents, silicone-based release agents are preferable since stable properties can be obtained at a low cost. The thickness of the release sheet is not particularly limited and is, in general, 10 to 250 µm.

The process for producing a film for scattering prevention will be described in the following.

### [Process for producing a film for scattering prevention]

The process of the present invention for producing a film for scattering prevention (hereinafter, referred to as the process of the present invention, occasionally) is the process for producing the film for scattering prevention described above which is characterized in that one face of a substrate film is coated with a material for forming a hard coat layer using an applicator roll to form a coating layer, an engraving rod having a diameter of 5 to 15 mm on which a plurality of independent depressions are present at a constant pitch is rotated in the positive direction with respect to the direction of movement of the substrate film (in the same direction as the direction of movement of the substrate film) while the engraving rod is brought into contact with the coating layer formed above so that a plurality of independent protrusions substantially corresponding to the depressions are formed on the surface of the coating layer at a constant pitch and, thereafter, the coating layer obtained above is cured.

### (Engraving rod)

In the process of the present invention, the engraving rod having a diameter of 5 to 15 mm is used so that the prescribed shape described above is provided to the coating layer formed by coating one face of the substrate film with the material for forming a hard coat layer by an applicator roll. When the diameter is smaller than 5 mm, the coating operation is difficult since the rod is bent. When the diameter exceeds 15 mm, the engraving rod leaves the surface of the coating film at a small angle, and the formation of protrusions becomes difficult due to the surface tension of the coating layer.

A plurality of independent minute protrusions are formed at a constant pitch on the entire face of the coating layer by bringing the engraving rod into contact with the coating layer and rotating the engraving rod in the positive direction with respect to the direction of movement of the substrate film (in the same direction as the direction of movement of the substrate film). It is necessary that the speed of rotation of the engraving rod is the same as the speed of movement of the substrate film. However, when the diameter of the rod is 15 mm or smaller, the effect of the surface tension of the coating layer is decreased since the time of contact of the engraving rod with the surface of the coating layer is short, and the engraving rod leaves the surface of the coating film at a great angle. Therefore, the minute protrusions can be formed even when the speed of rotation is not the same as the speed of movement of the substrate film.

To form the protrusion having the shape described above, a plurality of independent depressions are formed on the surface of the engraving rod at a constant pitch. The depression has substantially the shape described in the following so that the protrusion having the shape described above is formed.

In the present invention, it is preferable that the depth of each of the depressions is 10 to 100 µm, more preferably 20 to 90 µm and most preferably 40 to 80 µm. The pitch between the adjacent depressions (the distance between the central points of the bottom portions) is 100 to 500 µm, more preferably 130 to 300 µm and most preferably 150 to 250 µm.

As the shape of each depression, it is preferable that the shape of the depression is an inverse frustum of a polygonal pyramid or an inverse frustum of a cone. As the inverse frustum of a polygonal pyramid, inverse frustums of trigonal pyramids, inverse frustums of tetragonal pyramids and inverse frustums of hexagonal pyramids are preferable. As for the sectional shape in the transverse direction, sides may have the same length (inverse frustums of regular polygonal pyramids) or different length. As the inverse frustum of a cone, the sectional shape in the transverse direction may be a circular shape or an elliptical shape. Among these shapes, inverse frustums of trigonal prisms and inverse frustums of tetragonal prisms are preferable from the standpoint of the easiness of preparation of the engraving rod.

It is preferable that the angle of the inverse frustum of a polygonal pyramid and the inverse frustum of a cone with respect to the bottom face is 120 to 150 degree.

In the present invention, it is preferable that the area of the opening of each inverse frustum of a polygonal pyramid and each inverse frustum of a cone is 0.01 to 0.25 mm², more preferably 0.015 to 0.09 mm² and most preferably 0.02 to 0.06 mm².

It is preferable that the depressions formed on the engraving rod are arranged at a constant distance in a direction inclined by 30 to 60 degrees with respect to the outer circumferential direction of the rod (the direction of the rotation). When the depressions are arranged in the same direction as the direction of the rotation, there is the possibility that linear depressions which are not independent are formed in the direction of the movement of the substrate film.

By using the engraving rod described above, the interference fringes are dispersed as minute interference fringes having sizes which cannot be recognized by naked eyes by forming independent minute protrusions corresponding to the depressions of the engraving rod on the entire face of the hard coat layer at a constant pitch.

Figures 1(a) to 1(c) show an example of the engraving rod used in the present invention. Figure 1 shows a front view in the direction perpendicular to the axis of the rod O. Figure 1(b) shows an expanded view obtained by developing the outer circumference of the engraving rod into a flat plane. Figure 1(c) shows an expanded view of the section cut along the line A-A shown in Figure 1(b). In the shape having protrusions and depressions 6 on the engraving rod 5, many linear first protrusions 1 disposed in parallel at the same distance and many linear second protrusions 2 disposed in parallel at the same distance intersect one another to form a lattice on the outer circumferential face of the cylindrical material of the rod 7. In the shape described above, many polygonal depressions 3 surrounded by the first linear protrusions and the second linear protrusions are formed independently in a manner such that the depressions 3 are uniformly distributed in the axial direction and in the circumferential direction of the engraving rod 5. In the present example, a group of the first protrusions is formed with many first linear protrusions 1, and a group of the second protrusions is formed with many second linear protrusions 2. In Figure 1(b), the lines shown by the chain line with one dot going downward at the right hand side are the central lines of the first linear protrusions 1, and the lines shown by the chain line with two dots going upward at the right hand side are the central lines of the second linear protrusions 2.

The group of the first linear protrusions 1 has the shape of many protruded screws twisted in the rightward direction with respect to the axis of the rod O of the material of the rod 7 at a twist angle of α1. The group of the second linear protrusions 2 has the shape of many protruded screws twisted in the direction opposite to the direction of the first linear protrusions 1 (in the leftward direction) at a twist angle of α2. In the present example, the twist angle α1 = 45°, and the twist angle α2 = -45°. The first linear protrusions 1 and the second linear protrusions 2 intersect at the right angle. The distance between the linear protrusions 1 is the same as the distance between the linear protrusions 2, and the shape of the opening of the depression 3 is a square.

The depression 3 has a shape of a square dish having a depth d of 0.5L or smaller, L being the length of the side of the opening, and a flat bottom face 3a. In the present example, the length of the side is 0.2 mm, the depth d is about 0.06 mm, and d=0.3L. The maximum width **w** of the opening of the depression 3 is the length of the diagonal line of the square, namely, **w** = 2L/(√2) ≒ 0.28 mm, and d ≒ 0.21W. The bottom face 3a is an approximately flat plane.

Each of the four side wall faces 3b of the square depression 3 is an inclined face which is inclined toward the inside at an angle of inclination of β which is specified in the range of 30 to 60°, and is inclined at β = 45° in this example. In other words, the depression 3 in the this example has a shape of an inverse frustum of a square pyramid having a transverse section of square shape, and the inner angle at the corner portion formed as the intersection of each side wall 3b and the bottom face 3a is an obtuse angle of 135°.

The first linear protrusion 1 and the second linear protrusion 2 have the same width **t**, which is: **t** ≒ 0.04 mm = 0.2L in the present example. The pitch between the adjacent depressions (the distance between central points of the bottom faces) is L+t ≒ 0.24 mm, and the area of the opening of the depression is about 0.04 mm² in this example.

### (Formation of hard coat layer)

In the process of the present invention, the formation of the hard coat layer is conducted as described in the following.

After the material for forming a hard coat layer is applied to one face of the substrate film by an applicator roll to form a coating layer, the engraving rod described above is rotated in the positive direction with respect to the direction of movement of the substrate film (in the same direction as the direction of movement of the substrate film) while the engraving rod is brought into contact with the coating layer formed above so that a plurality of independent minute protrusions substantially corresponding to the depression on the engraving rod are formed on the surface of the coating layer at a constant pitch. Then, the coating layer is cured, and the hard coat layer is formed.

Figure 2 shows a diagram exhibiting an example of the apparatus for forming an uncured coating layer used for forming the hard coat layer in the process for producing a film for scattering prevention of the present invention.

An applicator roll 11 which is rotated in the rightward direction in Figure 2 by being driven by a motor for driving a roll, which is not shown in the figure, is disposed directly under the substrate film W which is transferred horizontally in a manner such that the substrate film moves from the left hand side to the right hand side in Figure 2. The upper end of the applicator roll 11 contacts the back face of the substrate film over the entire width. The lower end of the applicator roll 11 is placed at the inside of a feeding pan 12 for feeding the material for forming a hard coat layer C and is dipped into the material for forming a hard coat layer C stored in the feeding pan 12. The material for forming a hard coat layer C is applied to the entire back face of the substrate film W in an excessive amount by driving and rotating the applicator roll 11 synchronously with the transfer of the substrate film W.

The feeding pan 12 and the storage tank for the material for forming a hard coat layer 13 used for storing the material for forming a hard coat layer C to be supplied to the feeding pan 12 are connected with each other through a piping for feeding 14. The piping for feeding 14 is equipped with a feeding pump 15 for feeding the material in the storage tank for the material for forming a hard coat layer 13 into the feeding pan 12. In the feeding pan 12, an overflow pipe 21 connected to the storage tank for the material for forming a hard coat layer 13 is disposed so that the height of the liquid surface of the material for forming a hard coat layer C stored in the feeding pan 12 is kept constant and bubbles floating on the liquid surface of the material C are removed. The feeding pump 15 works when the material for forming the hard coat material C is applied to the substrate film W from the feeding pan 12 by the applicator roll 11 in a manner such that the material for forming a hard coat layer C in an excessive amount can be returned to the storage tank for the material for forming a hard coat layer 13 through the overflow pipe 21. The height of the liquid surface of the material for forming a hard coat layer C stored in the feeding pan 12 can be kept constant due to the above mechanism.

An engraving rod 17 driven and rotated in the rightward direction in Figure 2 by a motor for driving the rod (not shown in the figure) is disposed at the downstream side in the direction of movement of the substrate film W. A pair of guide rolls 22 are disposed at the side of the substrate film W opposite to the side having the engraving rod 17. One of the pair of guide rolls 22 is disposed at the upstream side and the other is disposed at the downstream side of the engraving roll 17. Due to the pair of guide rolls 22, the upper end of the engraving roll 17 can be kept contacting the back face of the substrate film W over the entire width of the substrate film with stability.

The engraving rod 17, which is used for forming the prescribed independent minute protrusions on the entire surface of the coating layer at a constant pitch and for controlling the thickness of the material for forming a hard coat layer C applied to the back face of the substrate film W by the applicator roll 11 in an excessive amount to the prescribed value, is supported with a holder having a rod shape 19, which is protruded upwards from the pan for recovering the material for forming a hard coat layer 18 disposed under the engraving rod and has a sectional shape of a V-block, in a manner such that the engraving rod can be freely rotated. The pan for recovering the material for forming a hard coat layer 18 and the storage tank for the material for forming a hard coat layer 13 are connected to each other through a piping for recovery 20 so that the material for forming a hard coat layer C scraped from the back face of the substrate film W by the engraving rod 17 flows into the pan for recovering the material for forming a hard coat layer 18 disposed directly under the substrate film and is returned to the storage tank for the material for forming a hard coat layer 13 via the recovering pipe 20.

After the uncured coating layer formed on one face of the substrate film is dried by heating, the dried coating layer is cured by irradiation with an energy ray or by heating, and the hard coat layer having a plurality of independent minute protrusions on the entire face at a constant pitch is formed.

The film for scattering prevention having the hard coat layer obtained in accordance with the present invention can disperse interference fringes into minute interference fringes having sizes which cannot be recognized by naked eyes, and the formation of interference fringes can be effectively suppressed since a plurality of independent minute protrusions are formed on the entire face of the hard coat layer at a constant pitch.

Unlike conventional films, the minute protrusions are not formed with fillers having different refractive index or incompatible resins. Therefore, the internal haze value is not increased, and the film does not appear white.

In accordance with the process of the present invention, conventional materials for forming a hard coat layer and conventional rod coaters can be utilized.

### EXAMPLES

The present invention will be described more specifically with reference to examples in the following. However, the present invention is not limited to these examples.

The interference fringes of a film for scattering prevention were evaluated in accordance with the following methods.

### <Evaluation of interference fringes>

A sample was laid on top of a black plate of an acrylic resin in a manner such that the hard coat layer was placed at the upper side. Using a fluorescent light of the three wavelength type, the formation of interference fringes was examined and evaluated in accordance with the following criteria:
good: no interference fringes observed
poor: interference fringes having a width of several centimeters or greater observed

### Example 1

### (1) Preparation of a pressure sensitive adhesive composition

An ethyl acetate solution containing an acrylic acid ester copolymer having carboxyl group (the weight-average molecular weight: 600,000) in a concentration of 33% by mass was obtained by radical polymerization of 75% mass of 2-ethylhexyl acrylate, 23% by mass of vinyl acetate and 2% by mass of acrylic acid. To 100 parts by mass of the obtained ethyl acetate solution, 0.5 parts by mass of an aluminum chelate compound [manufactured by SOKEN CHEMICAL AND ENGINEERING Co., Ltd.; "M-5A"; aluminum trisacetylacetonate; the solid contents: 4.95% by mass] and 4.0 parts by mass of an ultraviolet light absorber [manufactured by CIBA SPECIALTY CHEMICALS K. K.; "CGL777MPAD"; a tris(hydroxyphenyl)triazine compound; the solid contents: 80% by mass] were added, and a pressure sensitive adhesive composition was prepared.

### (2) Preparation of a material for forming a hard coat layer

Toluene in an amount of 150 parts by mass, 100 parts by mass of dipentaerythritol pentaacrylate [manufactured by SARTMER JAPAN Co., Ltd.; the trade name: "SARTMER SR399E"] as the monomer of the energy ray curable type and 5 parts by mass of a photopolymerization initiator [manufactured by CIBA SPECIALTY CHEMICALS K. K.; the trade name: "IRGACURE 651"] were uniformly mixed, and a coating fluid comprising a material for forming a hard coat layer was prepared.

### (3) Preparation of a film for scattering prevention

Using a rod having a diameter of 6 mm which had a plurality of depressions having the shape shown in Figure 1, i.e., an inverse frustum of a regular tetragonal pyramid having a depth of 60 µm and a length of the side of 200 µm (the area of the opening: 0.04 mm²; the angle between the side face and the bottom face: 45 degrees), on the surface at a pitch of 240 µm as the engraving rod and a coating apparatus shown in Figure 2, one face of the substrate film was coated with the coating fluid obtained above in (2) in a manner shown in the following. As the substrate film, a polyethylene terephthalate film having a thickness of 50 µm [manufactured by MITSUBISHI CHEMICAL POLYESTER FILM Co., Ltd.; the trade name: "T600E"] was used.

After the coating fluid was transferred to one face of the substrate film moving at a speed of 30 m/minute using an applicator roll having lines of 120 lines/2.54 cm (120 lines/inch) and a diameter of 200 mm, the engraving rod described above was rotated at a speed of 50 revolutions/minute in the same direction as the direction of movement of the substrate film while the engraving rod is kept contacting the face of the coating layer. Thus, the depressions on the engraving rod were transferred to the face of the coating layer, and protrusions substantially corresponding to the depressions were formed.

After the treatment for drying at 70°C for 1 minute, the face of the coating layer was irradiated with ultraviolet light under the condition of an illuminance of 400 mW/cm² and a quantity of light of 125 mJ/cm² so that the coating layer was cured, and a hard coat layer was formed. The thickness of the hard coat layer (the distance from the bottom face of the protrusion to the surface of the substrate film) was 1.7 µm, and the height of the protrusion (the distance from the top portion to the bottom face of the protrusion) was 1.2 µm.

Using a release film obtained by forming a layer of a release agent of a silicone resin on the surface of a polyethylene terephthalate film having a thickness of 38 µm, the face of the layer of the release agent was coated with the pressure sensitive adhesive composition obtained above in (1) in an amount such that the thickness after being dried was 15 µm. The obtained coating layer was dried at 100°C for 1 minute, and a pressure sensitive adhesive layer having a release film was prepared.

The pressure sensitive adhesive layer having a release film prepared above was laminated to the face of the substrate film opposite to the face having the hard coat layer, and a film for scattering prevention was prepared.

The result of evaluation of the film for scattering prevention is shown in Table 1.

### Comparative Example 1

A film for scattering prevention was prepared in accordance with the same procedures as those conducted in Example 1 except that a rod having a diameter of 6 mm having a wire having a diameter of 0.2 mm wound around the rod was used in place of the engraving rod used in Example 1(3).

The result of evaluation of the film for scattering prevention is shown in Table 1.

**Table 1**

| Evaluation of interference fringes | |
|---|---|
| Example 1 | good |
| Comparative Example 1 | poor |

Interference fringes having widths of several centimeters were observed in the film for scattering prevention of Comparative Example 1 in which the hard coat layer was formed by using the rod having a wire wound around the rod. In contrast, no interference fringes were found in the film for scattering prevention which is produced by the process of the present invention in which the hard coat layer was formed by using the engraving rod.

### INDUSTRIAL APPLICABILITY

The film for scattering prevention which is produced by the process of the present invention can disperse interference fringes into minute interference fringes having sizes which cannot be recognized by naked eyes and the formation of interference fringes can be effectively suppressed since a plurality of independent minute protrusions are formed on the entire face of the hard coat layer at a constant pitch.

## Claims

1. A process for producing a film for scattering prevention,
which comprises
coating one face of a substrate film with an excessive amount material solution having a solid contents concentration in the range of 20 to 60 % by mass for forming a hard coat layer using an applicator roll to form a uncured coating layer,
rotating an engraving rod having a diameter of 5 to 15 mm on which a plurality of independent depressions are present at a constant pitch in a positive direction with respect to the direction of movement of the substrate film,
scraping the material for forming a hard coat layer from the one face of the substrate film by the engraving rod while the engraving rod is brought into contact with the coating layer formed above so that a plurality of independent protrusions substantially corresponding to the depressions are formed on a surface of the coating layer at a constant pitch,
drying by heating the coating layer obtained above, and thereafter,
curing the dried coating layer by irradiation with an energy ray,
wherein the film for scattering prevention produced by the above process comprises a hard coat layer formed on one face of the substrate film, and a pressure sensitive adhesive layer and a release sheet successively laminated on another face of the substrate film,
a plurality of independent protrusions comprising a material of an energy curable type are present on the entire surface of the hard coat layer at a constant pitch,
the height of each protrusion is 0.1 to 10 µm, and the pitch between adjacent protrusion (a distance between central points of top portions of the protrusions) is 100 to 500 µm,
the shape of the protrusion is a frustum of a polygonal pyramid or a frustum of a cone,
the area of a bottom face of each protrusion is 0.001 to 0.25 mm², and the angle of a face of the frustum of a polygonal pyramid or the frustum of a cone with respect to the bottom face is 30 to 60 degrees.

2. A process for producing a film for scattering prevention according to claim 1, wherein the depressions formed on the engraving rod are arranged at a constant distance in a direction inclined by 30 to 60 degrees with respect to an outer circumferential direction of the rod.

3. A process for producing a film for scattering prevention according to any one of claims 1 and 2, wherein the material for forming a hard coat layer is a material of an energy curable type, and the coating layer is cured by application of an energy to the coating layer.

## Patentansprüche

1. Verfahren zur Herstellung einer Schicht zur Verhinderung von Streuung umfassend das Beschichten einer Seite eines Substrats mit einer überschüssigen Menge einer Materiallösung mit einer Konzentration an festen Inhaltsstoffen im Bereich von 20 bis 60 Massenprozent zur Bildung einer Hartschicht mittels einer Auftragswalze, um eine ungehärtete Schicht zu erzeugen,
das Rotieren eines Gravurstabs mit einem Durchmesser von 5 bis 15 mm, auf dem sich eine Vielzahl von unabhängigen Vertiefungen mit konstantem Abstand in positiver Richtung in Bezug auf die Bewegungsrichtung des Substrats befinden,
das Abschaben des Materials zur Bildung der Hartschicht von einer Seite des Substrats durch den Gravurstab während der Gravurstab mit der wie oben gebildeten Schicht in Kontakt gebracht wird, sodass eine Vielzahl von unabhängigen Erhebungen in konstantem Abstand auf der Oberfläche der Schicht gebildet werden,
das Trocknen der vorgenannt gebildeten Schicht durch Erhitzen, und danach
das Aushärten der getrockneten Schicht durch Bestrahlung mit energetischen Strahlen, wobei
die durch das vorgenannte Verfahren erzeugte Schicht zur Verhinderung von Streuung eine Hartschicht auf einer Seite des Substrats und eine druckempfindliche Klebstoffschicht und eine Abziehfolie, die aufeinander folgend auf einer anderen Seite des Substrats laminiert sind, umfasst,
wobei eine Vielzahl von unabhängigen Erhebungen, die ein energetisch härtbares Material umfassen, in konstantem Abstand auf der gesamten Oberfläche der Hartschicht vorliegen,
wobei die Höhe der einzelnen Erhebungen 0,1 bis 10 µm und der Abstand zwischen angrenzenden Erhebungen (Distanz zwischen den Mittelpunkten der Spitze der Erhebungen) 100 bis 500 µm ist,
wobei die Form einer Erhebung ein polygonaler Pyramidenstumpf oder ein Kegelstumpf ist,
wobei die Fläche der Bodenseite jeder Erhebung 0,001 bis 0,25 mm² beträgt, und
wobei der Winkel einer Seite des polygonalen Pyramidenstumpfs oder des Kegelstumpfs 30 bis 60 Grad in Bezug zur Bodenfläche ist.

2. Verfahren zur Herstellung einer Schicht zur Verhinderung von Streuung nach Anspruch 1, wobei die Vertiefungen auf dem Gravurstab in einem konstanten Abstand in einer zu 30 bis 60 Grad geneigten Richtung in Bezug zur äußeren Umfangsrichtung des Stabs angeordnet sind.

3. Verfahren zur Herstellung einer Schicht zur Verhinderung von Streuung nach Anspruch 1 oder 2, wobei das Material zur Bildung der Hartschicht ein energetisch härtbares Material ist und die Schicht durch Energieeintrag auf die Schicht gehärtet wird.

## Revendications

1. Procédé de production d'un film de prévention de diffusion, qui comprend le fait
de revêtir une face d'un film de substrat avec une solution de matériau en quantité excessive ayant une concentration en matières solides comprise dans la plage allant de 20 à 60% en masse pour former une couche de revêtement dure en utilisant un rouleau applicateur pour former une couche de revêtement non durcie,
de faire tourner une tige de gravure ayant un diamètre compris entre 5 et 15 mm sur laquelle une pluralité de creux indépendants sont présents à un pas constant dans une direction positive par rapport à la direction de déplacement du film de substrat,
de racler le matériau pour former une couche de revêtement dure à partir de la face du film de substrat par la tige de gravure lorsque la tige de gravure est mise en contact avec la couche de revêtement formée ci-dessus de sorte qu'une pluralité de protubérances indépendantes correspondant sensiblement aux creux soient formées sur une surface de la couche de revêtement à un pas constant,
de sécher par chauffage la couche de revêtement obtenue ci-dessus, et par la suite,
de durcir la couche de revêtement séchée par irradiation avec un rayon d'énergie,
dans lequel le film de prévention de diffusion produit par le procédé ci-dessus comprend une couche de revêtement dure formée sur une face du film de substrat, et une couche d'adhésif sensible à la pression et une feuille de libération stratifiées successivement sur une autre face du film de substrat,
une pluralité de protubérances indépendantes comprenant un matériau de type durcissable par une énergie sont présentes sur toute la surface de la couche de revêtement dure à un pas constant,
la hauteur de chaque protubérance est comprise entre 0,1 et 10 µm, et le pas entre des protubérances adjacentes (une distance entre des points centraux de parties supérieures des protubérances) est compris entre 100 et 500 µm,
la forme de la protubérance est un tronc d'une pyramide polygonale ou un tronc d'un cône,
la superficie d'une face inférieure de chaque protubérance est comprise entre 0,001 et 0,25 mm², et
l'angle d'une face du tronc d'une pyramide polygonale ou le tronc d'un cône par rapport à la face inférieure est compris entre 30 et 60 degrés.

2. Procédé de production d'un film de prévention de diffusion selon la revendication 1, dans lequel les creux formés sur la tige de gravure sont agencés à une distance constante dans une direction inclinée de 30 à 60 degrés par rapport à une direction circonférentielle extérieure de la tige.

3. Procédé de production d'un film de prévention de diffusion selon l'une quelconque des revendications 1 et 2, dans lequel le matériau de formation d'une couche de revêtement dure est un matériau de type durcissable par énergie, et la couche de revêtement est durcie par application d'une énergie à la couche de revêtement.
